# EUROPEAN PATENT APPLICATION

(11) **EP 3 804 507 A1**
(43) Date of publication of application: **14.04.2021**
(21) Application number: 19742651.3
(22) Date of filing: 05.06.2019
(51) Int. Cl.: A01G 27/02, A01C 1/02, A01G 27/04

(54) **IRRIGATION AND FERTILISATION SYSTEM**

(30) Priority: 07.06.2018 PT 2018110777
(71) Applicant: Tecniferti, S.A., 2416-903 Leiria (PT)
(72) Inventor: RODRIGUES SOARES, Casimiro, 1000-155 Lisboa (PT)
(74) Representative: Pereira da Cruz, Joao
(86) International application number: PCT/IB2019/054676
(87) International publication number: WO 2019/234652

(57) **Abstract**

The present invention relates to a system for irrigation and fertilisation having at least one layer of fertilizer contained in a casing formed by two faces, an inner face and an outer face, both faces made from biodegradable materials and the grammage of the two faces being different, transferring the fertilizer through the face of lower grammage. The fertilizer layer is between at least one layer of water and the latter is communicable with a substrate; and the lower grammage face is in contact with water and the other face may or may not be in contact with the substrate.

## Description

### FIELD OF THE INVENTION

The present invention relates to the planting of forest species and/or other plant species, in particular to the field of fertilisation and water retention systems for plant cultivation, specifically intended for the time of planting. It is an object of the present invention to provide the transplanted plants with fertility and moisture conditions which determine their viability. In addition, it is also an object of the present invention to adopt an automatic system that allows the plant to be installed in the soil automatically, quickly and with all the structure required for its viability.

### SCOPE OF THE INVENTION

The fertilisation and irrigation systems available on the market require a permanent monitoring of the process by mechanical and/or digital means and, in the absence of the said technological means, the user will have to verify the need for fertilisation and/or irrigation and then, if applicable, to carry out the fertilisation and/or irrigation task manually. This is because it is important to check how much of these nutrients, water and fertilizers, do reach the plants, i.e., an excess of water can lead to the destruction of the plant by waterlogging, thus causing it to rot, and on the other hand the lack of water causes the plant to dry.

This process of fertilisation and irrigation becomes even more critical when transplanting the plant or planting the seed, since at this stage an increased care is needed as regards the amount of nutrients that reach the plant, so that it can resist the initial factors such as weather conditions, etc.

Moreover, these plants that will be replanted are often kept in a nursery and only when they have matured can they be transplanted to the fields or forests, thus causing them to have a greater sensitivity at the time of transport and replacement in the soil.

In addition to the foregoing, it should also be noted that the replanting or mass planting of many species entails high costs, especially due to the time it requires, since the plant must be placed on the ground in an equivalent medium. It is important to mention, for the development of the present document and for realizing all of the advantages of the present invention, that the act of planting implies that a perforation is made in the soil, or in equivalent medium, where the germinated seed or plant is placed, and that the said perforation is refilled, i.e., one must open a hole and then cover it again.

Therefore, this invention allows the aforementioned needs to be met, that is to say, it discloses an irrigation and fertilisation system, which is controlled and self-sufficient, from the act of placing the plant in the soil until its development to the point where it is able to be healthily anchored to the ground.

In order to solve the technical problems associated to the above mentioned needs, both in terms of maintenance of the plant that is cultivated by providing an efficient and gradual way, and in terms of optimization of the time required for mass planting, the irrigation and fertilisation system which is the object of the present invention discloses means for storing the fertilizer and the water, separated from one another, the said means allowing the passage of water through its surface to the substrate (soil, water, vermiculite, etc.) where the plant or seed is enveloped, the water being the carrier medium of the fertilizer, since between the stored water and the substrate there is a layer of fertilizer.

The moisture required for the development of the plant is thereby obtained without the need for permanent monitoring and action on it, and the specific configuration wherein there must be a layer of fertilizer between at least one layer of water and the substrate, allows cultivation with no need to plant or to seed, once the necessary conditions for the plant or seed to develop and anchor to the soil are reproduced.

### STATE OF THE ART

The present invention finds as state-of-the-art the patent WO 9210087 A1, which discloses a hydrosoluble polymeric material sachet, which contains a seed enveloped in vermiculite, and although partially the plant may be planted without a constant monitoring, the moisture which is needed for the development of the seed is not guaranteed, nor is it that the fertilizer will in fact be carried to the seed.

So, this invention has contributed to the state of the art with the following advantages:
- Fertilisation of the plant without coming into direct contact with it, thus avoiding to burn the substrate by direct contact of the fertilizer with it, and the said fertilisation being constantly and gradually made;
- Providing water to the plant in a balanced way without any permanent external action and being this constant and gradual, avoiding waterlogging of the substrate, preventing saturation of the substrate with water, but nevertheless, moisturizing it and keeping it wet;
- Water retention for the benefit of the plant without coming into direct contact with it, in order to avoid waterlogging of the substrate;
- Environmentally-friendly solution, as it uses biodegradable materials only.

### SUMMARY OF THE INVENTION

The present invention relates to a controlled and self-sufficient irrigation and fertilisation system, which presents various embodiments, depending on the plant as well as on the cultivation or planting scheme, and which in essence consists of at least one layer of water, followed by at least one layer of fertilizer.

These layers have to be separated from each other. In order to achieve this goal, biodegradable and porous material is provided between them. It shall be noted that it is through the surface of the said biodegradable and porous material that the transfer of water and fertilizer is made to the plant to be cultivated or planted, with the fertilizer being carried through the water. This is the reason why it is essential that at least one layer of fertilizer is contained in a casing formed by the biodegradable and porous material and is located between at least one layer of water and is communicable with the substrate on which is the plant or seed. It is essential that the grammage of the face that contacts the water is lower than that of the face which does not contact it, for the transfer of the fertilizer to the water to occur, as well as for preventing the passage of the fertilizer from the other face to the outside, be it the substrate or other surface.

In short, the fertilizer should be placed in the casing or, if necessary, a set of identical casings. The outer face of the said casing, or set of casings, is comprised of the lower grammage material, referred to as the outer material, and must be in contact with water, so that the fertilizer, when crossing the surface of the outer material, mixes with the water and this mixture communicates with the substrate of the plant or seed.

### DETAILED DESCRIPTION OF THE INVENTION

The present invention relates to a controlled and self-sufficient irrigation and fertilisation system, which comprises at least one layer of fertilizer contained in a casing formed by two faces of inner and outer materials, the said materials being biodegradable and having different grammage, and in which the layer of fertilizer is located between at least one layer of water and the latter is communicable with the substrate containing the plant or seed.

The biodegradable inner and outer materials have both low density polyethylene (LDPE) coated kraft-type papers, with different grammage, the inner material weighing between 61 and 69 g/m², and the outer material between 41 and 47 g/m².

In order to obtain a higher strength the papers can have a ribbed or grooved texture. For a better integration in nature, they can present the natural colour, this being a natural brown, with the advantage of involving less additives for its manufacturing process, since it does not need pigments.

This type of paper has high mechanical strengths, especially tear strength and elongation strength. It is through this paper that the transfer of fertilizer and water to the substrate is carried out by wetting the same. Additionally, since it is simultaneously resistant and porous it allows the nutrients to be gradually transferred from the fertilizer to the substrate and provides hydration without soaking.

In a preferred embodiment of the invention, the fertilizer is placed in a casing which has two faces, an inner face and an outer face, the grammage of the two faces being different. The lower grammage face should be in contact with water, and the other face may or may not be in contact with the substrate.

The transfer of the fertilizer to the substrate is carried out via water, and since the grammage of the outer face is lower it allows the fertilizer to be released through the same and be diluted in the water which is in contact with this face; on the other hand, the other face having a higher grammage, the fertilizer is prevented from crossing it, or in case it does cross, it will be so slow that it does not burn the plant or seed.

This transfer of the water and fertilizer mixture to the substrate can be carried out in various ways: or the substrate is in permanent contact with the water and the casing and this transfer occurs permanently, which is the most common case in forest land; or this contact of the substrate with the water does not occur permanently, this solution being indicated for indoor cultivation or when the irrigation is monitored by users, which is suitable for containers/vessels where the water is retained.

For the latter case, a feed twist is placed inside the substrate, so that the user is less required to feed the plant, and which is communicable with the water and fertilizer mixture. In this way, the user puts the substrate in containers, and separated from the substrate but in contact with the water where the feed twist is also contacting, the casing or set of casings with fertilizer. The periodic placement of water in the container is also made by the user, the said water being mixed with the fertilizer that is in the casing, by contact of the lower grammage face with said water, and consequently transporting the fertilizer, and in its turn, through the feed twist, watering the plant with the mixture.

As for the first case, in which there is no feed twist, an advantageous embodiment of the invention is the water to be stored in the casing itself, so that the periodic irrigation is not an issue, this being preferable for outdoor cultivation unsupervised by a user or monitoring system. In this preferred embodiment, the water accumulation is achieved by placing a double sheet on at least one of the faces of the casing, preferably in the lower grammage one, the latter being the one to be contacted with water, and which will allow the retention of water as a result of an initial irrigation of retained water from rainfall and that when overflowing is consequently carried to the substrate.

It should be noted that the two sheets, the outer one and the one relating to the lower grammage face, are connected forming a pouch.

This double sheet may be on both sides of the fertilizer-containing casing, thus becoming a four-ply casing, wherein the two inner sheets form the said casing which contains the fertilizer and the outer sheets are attached to the inner sheets, forming a pouch. In this preferred embodiment, the grammage of the faces may be identical.

This attachment of the two outer sheets to the inner sheets forming a pouch is not continuous along the entire connection perimeter, but preferably has apertures which allow the entry and circulation of fresh air and water into the respective pouch, thus enabling retention of water resulting from an initial irrigation by the user or from rainfall, in addition to physically reinforcing the separation between the substrate and the casing, thereby protecting it.

It is a further object of the invention to provide a kit for cultivation and/or planting, which is comprised of:
- a container for placing a plant or seed, which may be a container made of plastic or biodegradable material;
- at least one casing, object of the present invention, with fertilizer for placement in the container;
- a feed twist for fixing to the substrate for absorption of irrigation water;
- a container for irrigation.

The cultivation and/or planting kit, after a first automated irrigation or by intervention of the user, may remain as is for domestic use, like a common plant in a pot, and since it has the casing and the twist, it presents the advantage of the irrigation not being required with the same periodicity of a common pot provided with substrate.

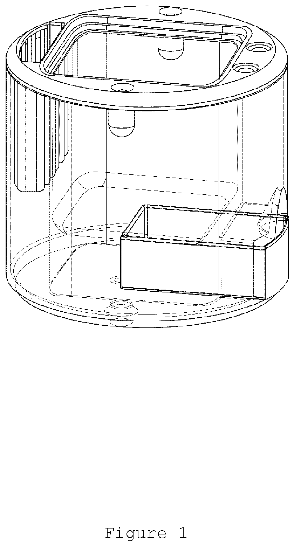

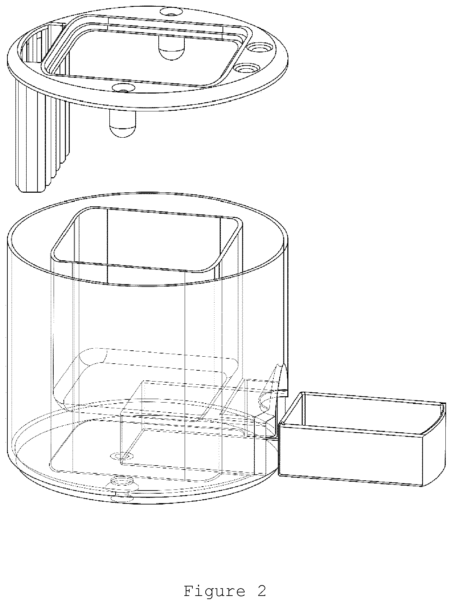

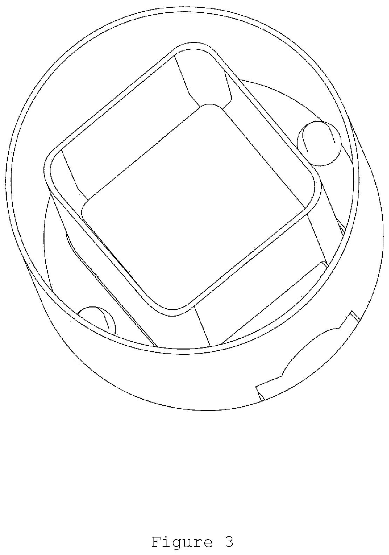

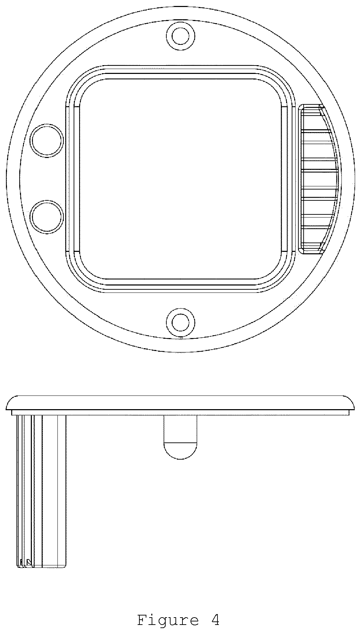

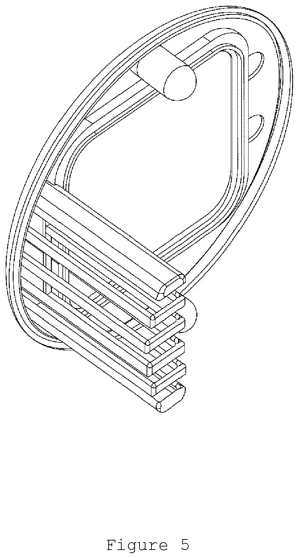

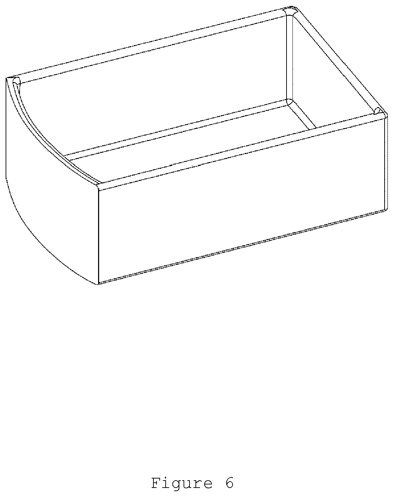

A preferred embodiment of the container for placing a plant or seed, which may be a container made of plastic or biodegradable material, is shown in Figures 1 to 6. In particular, a container for cultivation and/or planting is depicted, which is comprised of:
a) compartment for placing a plant or seed which comprises a removable dispenser compartment;
b) compartment for placing at least one casing object of the present invention;
c) hole for placing the feed twist, for fixing to the substrate in order to absorb the irrigation water;
d) irrigation compartment.

Alternatively, it can be planted directly on the soil, when the growth of the plant already justifies it as a whole, since all its constituents are biodegradable.

It should be noted that the present invention may exhibit various amounts of fertilizer-containing casings, with at least one being required, and may also have combinations of identical casings, or in different alternatives, with or without double sheet, on one or both faces. In addition, the double-sheet may be a triple-sheet or a plurality of sheets, depending on the required strength and storage capacity.

As will be evident to a person skilled in the art, the present invention should not be limited to the embodiments described herein, with a number of changes and combinations being possible, the latter remaining within the scope of this invention. Of course, the preferred embodiments above described are combinable in the different possible forms, the repetition of all such combinations being herein avoided.

## Claims

1. Irrigation and fertilisation system, **characterized in that** it comprises:
a) at least one layer of fertilizer contained in a casing formed by two faces, an inner face and an outer face, both faces made from biodegradable materials and the grammage of the two faces being different, transferring the fertilizer through the face of lower grammage;
b) the fertilizer layer is between at least one layer of water and the latter is communicable with a substrate;
c) the lower grammage face is in contact with water and the other face may or may not be in contact with the substrate.

2. A system according to the previous claim, **characterized in that** the materials of the inner and outer faces are low density polyethylene (LDPE) coated kraft-type papers.

3. A system according to the previous claim, **characterized in that** the kraft-type papers are ribbed or grooved and may have the natural colour.

4. A system according to the previous claims, **characterized in that** the inner and outer materials have different grammage.

5. A system according to the previous claim, **characterized in that** the grammage of the inner material is between 61 and 69 g/m² and the grammage of the outer material is between 41 and 47 g/m².

6. A system according to the previous claims, **characterized in that** it has a double-sheet in at least one of the faces of the casing, which forms a pouch, preferably in the lower grammage face.

7. A system according to the previous claims, **characterized in that** it has a double-sheet on both faces of the casing and the grammage of both faces is identical.

8. A system according to the previous claims, **characterized in that** the attachment of the double-sheets is discontinuous, preferably comprising apertures.

9. A container intended for cultivation and/or planting, **characterized in that** it is comprised of:
a) compartment for placing a plant or seed, which comprises a removable dispenser compartment;
b) compartment for placing at least one irrigation and fertilisation system, as described in claims 1 to 6;
c) hole for placing the feed twist, for fixing to the substrate in order to absorb the irrigation water;
d) irrigation compartment.

10. Kit for cultivation and/or planting, **characterized in that** it comprises:
• the container described in claim 9;
• at least one irrigation and fertilisation system, as described in claims 1 to 8;
• feed twist for fixing to the substrate in order to absorb the irrigation water;
• irrigation container.
